(19) Europäisches Patentamt
European Patent Office
Office européen des brevets

(11) Veröffentlichungsnummer: **0 202 487**
**B1**

(12) # EUROPÄISCHE PATENTSCHRIFT

(45) Veröffentlichungstag der Patentschrift: **31.10.90**

(51) Int. Cl.⁵: **C08G 65/30**

(21) Anmeldenummer: **86105519.2**

(22) Anmeldetag: **22.04.86**

(54) **Verfahren zur Verminderung des Anteils von cyclischen oligomeren Ethern in Polytetramethylenetherglykolen oder Polyoxibutylen-polyoxialkylenglykolen.**

(30) Priorität: **23.04.85 DE 3514547**

(43) Veröffentlichungstag der Anmeldung: **26.11.86 Patentblatt 86/48**

(45) Bekanntmachung des Hinweises auf die Patenterteilung: **31.10.90 Patentblatt 90/44**

(84) Benannte Vertragsstaaten: **BE DE FR GB IT LU NL**

(56) Entgegenhaltungen:
**US-A- 3 823 145**
**US-A- 4 251 654**
**US-A- 4 500 705**

**PATENT ABSTRACTS OF JAPAN, Band 9, Nr. 171 (C-291) [1894], 16. Juli 1985; & JP-A-60 42 421 (MISUBISHI KASEI KOGYO K.K.) 06.03.1985**

(73) Patentinhaber: **BASF Aktiengesellschaft, Carl-Bosch-Strasse 38, D-6700 Ludwigshafen(DE)**

(72) Erfinder: **Mueller, Herbert, Dr., Carostrasse 53, D-6710 Frankenthal(DE)**

**EP 0 202 487 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Diese Erfindung betrifft ein Verfahren zur Verminderung des Anteils von cyclischen oligomeren Ethern in Polytetramethylenetherglykolen oder Polyoxibutylen-polyoxialkylenglykolen durch eine extraktive Behandlung von oligomeren cyclische Ether enthaltenden Polytetramethylenetherglykolen oder Polyoxibutylen-polyoxialkylenglykolen mit einem Gemisch aus Wasser und einem Kohlenwasserstoff.

Polytetramethylenetherglykole lassen sich z.B. durch Polymerisation von Tetrahyrofuran in Gegenwart von Carbonsäureanhydriden und Hydrolyse der dabei erhaltenen Polytetramethylenetherglykolcarbonsäurediester herstellen (DE-OS 28 01 578). Polyoxibutylen-polyoxialkylenglykole sind z.B. durch Copolymerisation von Tetrahydrofuran und 1,2-Alkylenoxiden erhältlich (GB-PS 854 958). Ein Nachteil dieser und anderer Verfahren ist, daß sich bei der Polymerisation bzw. Copolymerisation von Tetrahydrofuran erhebliche Anteile an niedermolekularen Produkten bilden.

Diese unerwünschten Nebenprodukte enthalten oder bestehen aus oligomeren cyclischen Ethern. Ihr Anteil kann bis zu 20 Gew.% betragen. Diese oligomeren cyclischen Ether sind aus mehreren Gründen unerwünscht. Sie stören als inerte Verbindungen bei der Weiterverarbeitung der Polymerisate, die man z.B. mit Isocyanaten zu Polyurethanen umsetzt. Sie wirken wie Weichmacher und senken meistens das mechanische Niveau der Fertigprodukte. Sie können auch an der Oberfläche der Fertigprodukte ausschwitzen oder von Lösungsmitteln herausgelöst werden, worunter z.B. die Formstabilität der Fertigerzeugnisse leidet.

Es hat deshalb nicht an Versuchen gefehlt, den Gehalt an oligomeren cyclischen Ethern in Polymerisaten und Copolymerisaten des Tetrahydrofurans zu reduzieren. Nach den Angaben der US-PS 4 127 513 wird zu diesem Zweck ein besonders aktivierter Montmorillonit als Katalysator für die Polymerisation verwendet. Bei diesem Verfahren ist von Nachteil, daß Polymerisate mit hohen Farbzahlen gebildet werden und die Polymerisationsgeschwindigkeit relativ gering ist. Außerdem enthalten z.B. die so erhaltenen Copolymerisate immer noch einen Anteil von 5 bis 6 Gew.% an oligomeren cyclischen Ethern. Nach den Angaben der US-PS 4 228 272 verwendet man für die Copolymerisation von Alkylenoxiden mit Tetrahydrofuran einen bestimmten Bleicherde-Katalysator. Dieses Verfahren soll Produkte mit verbesserter Farbzahl bei erhöhter Polymerisationsgeschwindigkeit liefern. Aber auch die so erhaltenen Copolymere enthalten noch etwa 4 Gew.% oligomere cyclische Ether. Dieser Oligomerengehalt ist für die Anwendung der Polymeren zur Herstellung von Polyurethanen, an die höhere mechanische Ansprüche gestellt werden, immer noch zu hoch.

In der EP-PS 6 107 wird ein Verfahren zur Verminderung des Gehaltes an oligomeren cyclischen Ethern in Copolymerisaten aus Tetrahydrofuran und Alkylenoxiden beschrieben, bei dem man die cyclischen Ether mit Hilfe einer säureaktivierten Bleicherde depolymerisiert. Bei diesem Verfahren, bei dem die cyclischen Ether in Tetrahydrofuran und verschiedene Nebenprodukte umgewandelt werden, besteht die Gefahr, daß auch die offenkettigen Glykole, also die gewünschten Alkylenoxid-Copolymere, depolymerisiert werden, sobald zu hohe Temperaturen oder zu lange Reaktionszeiten gewählt werden. Dies ist immer dann der Fall, wenn man den Gehalt an den unerwünschten oligomeren cyclischen Ethern möglichst vollständig entfernen will. Ausbeuteverluste und die Bildung gefärbter Polymerisate sind dann nicht auszuschließen.

In der GB-PS 854 958 ist angebeben, daß unumgesetzte Monomere und niedermolekulare oligomere Ether, die als Nebenprodukte bei der Copolymerisation von Tetrahydrofuranen mit Epoxiden entstehen, durch Vakuumdestillation abgetrennt werden können. Dies gelingt jedoch nur bis zu einem Restgehalt von 5 Gew.% (s. US-PS 4 251 654, Spalte 1, Zeilen 56 bis 59).

In der JP-A 6 042 421 wird ein Verfahren zur Gewinnung von Polytetramethylenetherglykolen mit enger Molekulargewichtsverteilung beschrieben, bei dem man Polytetramethylenetherglykole mit einem Molekulargewicht von 500 bis 3000 mit einem Gemisch aus Wasser einerseits und Aceton, Methanol, Ethanol oder Acetonitril andererseits mischt und nach Phasentrennung ein Polytetramethylenetherglykol mit hohem Molekulargewicht aus der unteren Phase isoliert. Bei diesem Verfahren ist die Trennschärfe und damit eine weitgehende Abtrennung der oligomeren Ether unzureichend. Außerdem reichern sich die im Polymerisat vorhandenen oligomeren cyclischen Ether in der Fraktion mit der höheren Molmasse an. In der US-A 3 823 145 wird ein Verfahren zur Reinigung von Polyoxialkylenetherpolyolen, die Rückstände wasserlöslicher Katalysatoren enthalten, beschrieben, bei dem man eine Mischung aus den Polyolen, Wasser und einem Lösungsmittel, das mit dem Polyol eine nicht mit Wasser mischbare Lösung bildet, zentrifugiert und aus der dabei erhaltenen nichtwäßrigen Phase das gereinigte Polyol gewinnt. Aus der US-A 4 500 705 ist bekannt, daß man den Gehalt an oligomeren cyclischen Ethern in Tetrahydrofuran-Polymerisaten dadurch vermindern kann, daß man das Polymerisat mit einem aliphatischen oder cycloaliphatischen Kohlenwasserstoff mit 6 bis 8 C-Atomen extrahiert.

In der US-PS 4 251 654 wird schließlich ein Verfahren beschrieben, bei dem man die oligomeren cyclischen Ether aus den rohen Polyoxibutylenpolyoxialkylen-glykolen mit Wasser extrahiert. Ein kombiniertes Extraktions-/Destillationsverfahren wird für Copolymerisate mit hohen Anteilen an oligomeren cyclischen Ethern empfohlen. Der Restgehalt an oligomeren cyclischen Ethern, den man nach dieser Arbeitsweise erreicht, liegt bei ca. 3 Gew.%.

Auch bei der Homopolymerisation des Tetrahydrofurans zur Gewinnung von Polytetramethylenetherglykolen (Polytetrahydrofuran), die man bekanntlich mit kationischen Katalysatoren vornimmt, werden cyclische oligomere Ether gebildet. Der Mengenanfall ist hier allerdings geringer als bei der Copolymerisation des Tetrahydrofurans; er hängt zudem ab vom mittleren Molekulargewicht der hergestellten Polymerisate. Produkte mit einem mittleren Molekulargewicht von etwa 1000 enthalten etwa 1 bis 2 Gew.% und solche mit einem mittleren Molekulargewicht von etwa 400 ca. 2 bis 5 Gew.% oligomere cyclische Ether. Verbindungen dieser Art stellen Gemische von chemischen Individuen der allgemeinen Formel

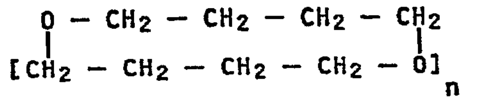

dar, wobei die Zahl n etwa zwischen 1 und 7 und das Konzentrationsmaximum der Verbindungen im Gemisch bei n = 2 bis 4 liegt. Diese oligomeren cyclischen Ether, die man als Kronenether bezeichnet, lassen sich von hydroxylgruppenhaltigen Verbindungen mit ähnlicher Molekülgröße nicht destillativ abtrennen. Man findet sie deshalb häufig als ungewollte Verunreinigungen in Polytetrahydrofuran mit niederem Molekulargewicht.

Da niedermolekulare Polytetramethylenetherglykole oder die ähnlich aufgebauten Copolymerisate aus Tetrahydrofuran und Alkylenoxiden die hohen Anforderungen, die an Kettenverlängerer gestellt werden, nur dann erfüllen, wenn sie im wesentlichen frei von cyclischen und oligomeren Ethern sind, bestand das Bedürfnis ein Verfahren zur finden, das eine möglichst weitgehende Verminderung des Anteils an cyclischen oliogmeren Ethern in Polytetramethylenetherglykolen oder Polyoxibutylenpolyoxialkylenglykolen ermöglicht und das es gestattet, die besonders gesuchten niedermolekularen Polyalkylenetherglykolen, die eine Funktionalität von mindestens 2 aufweisen, frei von inerten cyclischen Nebenverbindungen zu gewinnen.

Es wurde nun gefunden, daß man den Anteil von cyclischen oligomeren Ethern in Polytetramethylenetherglykolen oder Polyoxibutylen-polyoxialkylenglykolen mit erheblich besseren Ergebnissen vermindern kann, wenn man oligomere cyclische Ether enthaltende Polytetramethylenetherglykole oder Polyoxibutylen-polyoxialkylenglykole, die durch Polymerisation von Tetrahydrofuran oder Copolymerisation von Tetrahydrofuran mit Alkylenoxiden erhalten wurden und die ein mittleres Molekulargewicht von 200 bis 450 aufweisen, mit einem Gemisch aus Wasser und eine Kohlenwasserstoff vermischt, und die gereinigten Polytetramethylenetherglykole oder Polyoxibutylen-polyoxialkylenglykole nach Phasentrennung aus der wäßrigen Phase isoliert.

Als Ausgangsstoffe verwendet man Polytetramethylenetherglykole oder Polyoxibutylen-polyoxialkylenglykole, die z.B. auf bekannte Weise durch Polymerisation von Tetrahydrofuran oder durch Copolymerisation von Tetrahydrofuran mit Alkylenoxiden, wie Ethylenoxid, erhältlich sind und die ein mittleres Molekulargewicht von 200 bis 450 aufweisen. Die als Ausgangsstoffe geeigneten Polytetramethylenetherglykole haben einen Gehalt an oligomeren cyclischen Ethern von etwa 1 bis 15 Gew.%. Die als Ausgangsstoffe geeigneten Copolymeren der genannten Art haben einen Gehalt an oligomeren cyclischen Ethern von etwa 2 bis 50 Gew.%. Die Herstellung der Polymeren wird z.B. in der GB-PS 854 958, der US-PS 4 228 272 und in der Monographie "Polytetrahydrofuran" von P.Dreyfuß, Gordon and Breach Science Publishers, New York, London, Paris 1982 beschrieben.

Als Kohlenwasserstoffe sind für das Extraktionsverfahren sowohl gesättigte und ungesättigte aliphatische und cycloaliphatische Verbindungen, als auch araliphatische oder aromatische Kohlenwasserstoffe geeignet, wobei die Kohlenwasserstoffe z.B. auch Substituenten, wie Halogenatome oder Alkoxygruppen enthalten können. Obwohl im allgemeinen solche Kohlenwasserstoffe bevorzugt werden, die bei Raumtemperatur flüssig sind, kann man, wenn man die Unbequemlichkeit der Druckarbeitsweise in Kauf nehmen will, auch mit tiefer siedenden Kohlenwasserstoffen mit zum Teil noch besserem Erfolg arbeiten. Bevorzugt werden gesättigte und ungesättigte aliphatische Kohlenwasserstoffe, sowie araliphatische und aromatischen Kohlenwasserstoffe. Man kann auch beliebige Gemische von Kohlenwasserstoffen verwenden. Aus hygienischen Gründen wird man aliphatischen Kohlenwasserstoffen und cycloaliphatischen Kohlenwasserstoffen den Vorzug geben. Beispielsweise werden die folgenden Kohlenwasserstoffe genannt: Gesättigte aliphatische und cycloaliphatische Kohlenwasserstoffe, wie Alkane, mit 2 bis 12 C-Atomen, z.B. Butan, Pentan und Dekan, Cycloaliphate mit 5 bis 12 C-Atomen, wie Cyclopentan, Cyclohexan, Cyclooctan und Cyclododecan, ungesättigte aliphatische oder cycloaliphatische Kohlenwasserstoffe, wie Alkene mit 4 bis 12 C-Atomen, wie iso-Buten und Cyclohexen, araliphatische Kohlenwasserstoffe, wie Ethylbenzol oder Isopropylbenzol und aromatische Kohlenwasserstoffe, wie Benzol, Toluol, Xylol, Chlorbenzol oder Naphthalin. Cyclohexan ist wegen seiner leichten Verfügbarkeit, seinen physiologischen und physikalischen Eigenschaften besonders bevorzugt.

Man vermischt die polymeren Ausgangsstoffe mit dem Gemisch aus Wasser und dem Kohlenwasserstoff im allgemeinen bei Normaldruck und bei Temperaturen bis 120°C, vorzugsweise bei 15 bis 50°C. Die Zusammensetzung des Gemisches aus Wasser und Kohlenwasserstoff ist in weiten Grenzen variierbar. Z.B. verwendet man Gemische, die auf 100 Gewichtsteile Wasser 10 bis 900, vorzugsweise 30 bis 300 Gewichtsteile Kohlenwasserstoff enthalten. Auch das Gewichtsverhältnis zwischen Polymerisat und Behandlungsgemisch kann in weiten Grenzen gewählt werden. Z.B. wendet man je 100 Gewichtsteile Polymerisat 5 bis 300, vorzugsweise 50 bis 200 Gewichtsteile des Gemisches aus Wasser und Kohlenwasserstoff an. Man vermischt die Einsatzstoffe in an sich üblichen Rührgefäßen, wobei die Rührzeit je Extraktionsstufe etwa 1 bis 30 Minuten beträgt. Bereits bei einer Extraktionsstufe wird eine weitgehende Verminderung des Anteils der cyclischen oligomeren Ether erreicht, so daß die polymeren Glykole in einer Reinheit von über 99% gewonnen werden können. Je nach dem Gehalt der zu extrahierenden cyclischen oligomeren Ether

in den polymeren Glykolen kann man auch mehrere Extraktionsstufen durchführen. Im allgemeinen extrahiert man in 1 bis 3 Stufen, wobei man bei der mehrstufigen Extraktion das Wasser und den Kohlenwasserstoff, die man aus der vorangegangenen Extraktion zurückgewinnt, erneut verwendet. Nach der Extraktion durch Vermischen trennt man die wäßrigen Phase von der organischen Phase durch Phasentrennung und isoliert die gereinigten Polytetramethylenetherglykole oder Polyoxibutylenpolyoxialkylenglykole aus der wäßrigen Phase, z.B. durch Destillation des Wassers. Die cyclischen oligomeren Ether isoliert man aus der organischen Phase, z.B. ebenfalls durch Destillation. So lassen sich z.B. die Kronenether nach einmaliger Extraktion in reiner Form gewinnen.

Nach dem erfindungsgemäßen Verfahren erhält man die zu trennenden Bestandteile in hoher Reinheit auf besonders wirtschaftliche Weise. Dieses vorteilhafte Ergebnis ist sehr überraschend, da man die von oligomeren cyclischen Ether weitgehend befreiten Tetrahydrofuran/Ethylenoxid-Polymerisate nach dem in der US-PS 4 251 654 beschriebenen Verfahren durch Extraktion der polymeren Ausgangsstoffe mit Wasser gewinnt. Während sich die cyclischen oligomeren Ether bei dem bekannten Extraktionsverfahren in der Wasserphase anreichern, gelangen sie bei dem Verfahren dieser Erfindung in die organische Phase. Dieses Ergebnis war ebensowenig zu erwarten als die Tatsache, daß sich die angestrebte Verminderung des Anteils an cyclischen oligomeren Ethern nach dem erfindungsgemäßen Verfahren mit besseren Resultaten -d.h. weitgehenderer Entfernung- und hoher Wirtschaftlichkeit erzielen läßt.

Die in den Beispielen genannten Teile sind Gewichtsteile. Sie verhalten sich zu Volumenteilen wie das Kilogramm zum Liter.

Beispiel 1

15 000 Teile eines niedermolekularen Polytetramethylenetherglykols, das auf bekannte Weise durch Polymerisation von Tetrahydrofuran erhalten wurde, mit einer Hydroxylzahl von 420mg KOH/g (entspricht einem mittleren Molekulargewicht von 266) das einen Gehalt an oligomeren cyclischen Ethern von ca. 4 Gew.% aufweist, werden in einem Rührbehälter mit 7 500 Teilen VE-Wasser und 7 500 Teilen Cyclohexan eine Stunde lang bei 25°C intensiv gerührt. Anschließend wird der Rührer abgestellt. Das Gemisch trennt sich in 2 Phasen. Nach 2 Stunden werden 90 Gew.% der unteren Phase aus dem Rührbehälter abgelassen. Sie sind durch Anteile der leichteren Phase nicht verunreinigt. Zur Erreichung einer exakten Trennung in leichte und schwere Phase läßt man den Rest des Gemisches aus dem Rührbehälter über eine Florentiner Flasche ab. Von dem eingesetzten Gemisch erhält man 25,1 Gew.% als klare obere Phase und 74,2 Gew.% als klare untere Phase. Verluste durch schlecht separierende Mischphasen treten nicht ein.

Durch Eindampfen, das man zunächst bei Normaldruck und dann im Vakuum bis zu Temperaturen von 130°C bei 1 mbar durchführt, stellt man fest, daß die obere organische Phase zu ca. 93% aus Cyclohexan und zu 7 Gew.% aus einem farblosen organischen Hochsieder mit einer Hydroxylzahl von ca. 10mg KOH/g besteht. Die gaschromatographische Analyse zeigt, daß der Hochsieder aus 4,3 Fl.% 15-Krone-3-ether, 30,6 Fl.% 20-Krone-4-ether, 35,4 Fl.% 25-Krone-5-ether, 21,2 Fl.% 30-Krone-6-ether, 6,5 Fl.% 35-Krone-7-ether und 2 Fl.% hydroxylhaltiger Glykole, die sich etwa aus gleichen Teilen Dibutylenglykol, Tributylenglykol, Tetrabutylenglykol und Pentabutylenglykol zusammensetzen, besteht.

Die untere wäßrige Phase besteht zu etwa 2 bis 3 Gew.% aus Cyclohexan, 27 bis 28 Gew.% aus Wasser und zu etwa 70% aus einem Polytetramethylenetherglykol mit der Hydroxylzahl 440 (entspricht dem mittleren Molekulargewicht 255). Durch temperaturprogrammierte Gaschromatographie und HPLC-Analyse wird nachgewiesen, daß der Gehalt an oligomeren cyclischen Ethern in dem so gereinigten Polytetramethylenetherglykol unter 1 Gew.% liegt. Wegen dieses geringen Gehaltes an inertem Material kann das so gewonnene niedermoleklare Polytetramethylenetherglykol ohne weiteres als Kettenverlängerer bei der Herstellung von Polyurethanen eingesetzt werden. Trennt man die bei der oben beschriebenen Extraktion gewonnene organische Phase durch Destillation in das Extraktionsmittel Cyclohexan und Polytetramethylenetherglykol und extrahiert letzteres wie oben beschrieben mit dem wiedergewonnenen Cyclohexan und dem Wasser ein zweites Mal, so gewinnt man ein Polytetramethylenetherglykol mit einem Molekulargewicht von 252, in dem oligomere cyclische Ether nicht mehr nachweisbar sind.

Beispiel 2

Man verfährt wie im Beispiel 1 beschrieben, wobei man jedoch ein niedermolekulares Polyoxibutylen-polyoxialkylenglykol, das man auf bekannte Weise durch Copolymerisation von Tetrahydrofuran und Ethylenoxid (Ethylenoxidgehalt ca. 30 Gew.%), erhalten hat und das ein mittleres Molekulargewicht von 350 und einen Gehalt an oligomeren cyclischen Ethern von 40 bis 50% aufweist, mit dem Gemisch aus Wasser und Cyclohexan vermischt. Bei der Phasentrennung erhält man 51 Gew.% obere Phase und 49 Gew.% untere Phase.

Die obere organische Phase wird durch Destillation bei Normaldruck und im Vakuum bei 0,2 mbar bis 120°C in Cyclohexan und organischen Hochsieder getrennt. Das Cyclohexan wird für die weiter unten beschriebene zweite Extraktion aufbewahrt. Die erhaltene obere Cyclohexan-Phase besteht zu 51 Gew.% aus den im Ausgangsprodukt enthaltenen oligomeren cyclischen Ethern, die wie aus der Hydroxylzahl von 67mg KOH/g hervorgeht, kaum durch Hydoxylgruppen enthaltende Anteile verunreinigt sind. Die untere Phase, die etwas Cyclohexan enthält, besteht zu 51 Gew.% aus Wasser, und zu 48 Gew.% aus niedermolekularem Mischpolymerisat aus Tetrahydrofuran und Ethylenoxid mit einer Hydroxylzahl von 220mg KOH/g. Wiederholt man die extraktive Behandlung mit einem gleichteiligen

Gemisch aus Wasser und Cyclohexan, so steigt die Hydroxylzahl des so behandelten Mischpolymerisates auf 300. Sie läßt sich durch eine dritte Extraktion der beschriebenen Art auf 340 mg KOH/g steigern und bleibt dann bei jeder weiteren extraktiven Behandlung konstant. Das so erhaltene gereinigte Polyoxibutylen-polyoxialkylenglykol, das eine Hydroxyzahl von 340 mg KOH/g und ein Molekulargewicht von ca. 330 aufweist ist frei von oligomeren cyclischen Ethern.

## Patentansprüche

1. Verfahren zur Verminderung des Anteils von cyclischen oligomeren Ethern in Polytetramethylenetherglykolen oder Polyoxibutylen-Polyoxialkylenglykolen, dadurch gekennzeichnet, daß man oligomere cyclische Ether enthaltende Polytetramethylenetherglykole oder Polyoxibutylenpolyoxialkylenglykole, die ein mittleres Molekulargewicht von 200 bis 450 aufweisen, mit einem Gemisch aus Wasser und einem Kohlenwasserstoff vermischt, und die gereinigten Polytetramethylenetherglykole oder Polyoxibutylen-polyoxialkylenglykole nach Phasentrennung aus der wäßrigen Phase isoliert.

2. Verfahren nach Anspruch 1, dadurch gekennzeichnet, daß man die gereinigten Polytetramethylenetherglykole oder Polyoxibutylen-polyoxialkylenglykole aus der Wasserphase und die oligomeren cyclischen Ether aus der Kohlenwasserstoffphase durch Eindampfen gewinnt.

3. Verfahren nach Anspruch 1, dadurch gekennzeichnet, daß man als Kohlenwasserstoff aliphatische oder cycloaliphatische Kohlenwasserstoffe verwendet.

4. Verfahren nach Anspruch 1, dadurch gekennzeichnet, daß man als Kohlenwasserstoff Cyclohexan verwendet.

5. Verfahren nach Anspruch 1, dadurch gekennzeichnet, daß man die polymeren Ausgangsstoffe mit dem Gemisch aus Wasser und einem Kohlenwasserstoff bei Normaldruck und bei Temperaturen bis 120°C vermischt.

6. Verfahren nach Anspruch 1, dadurch gekennzeichnet, daß das wäßrige Gemisch auf 100 Gewichtsteile Wasser 10 bis 900 Gewichtsteile Kohlenwasserstoff enthält.

7. Verfahren nach Anspruch 1, dadurch gekennzeichnet, daß man auf 100 Gewichtsteile Polymerisat 5 bis 300 Gewichtsteile des Gemisches aus Wasser und Kohlenwasserstoff anwendet.

## Claims

1. A process for reducing the content of cyclic oligomeric ethers in a polytetramethylene ether glycol or polyoxybutylene polyoxyalkylene glycol, wherein a polytetramethylene ether glycol or a polyoxybutylene polyoxyalkylene glycol which contains the said ethers and has a mean molecular weight of from 200 to 450 is mixed with a mixture of water and a hydrocarbon, and, after phase separation, the purified polytetramethylene ether glycol or polyoxybutylene polyoxyalkylene glycol is isolated from the aqueous phase.

2. A process as claimed in claim 1, wherein the purified polytetramethylene ether glycol or polyoxybutylene polyoxyalkylene glycol is obtained from the aqueous phase and the oligomeric cyclic ethers from the hydrocarbon phase by evaporation.

3. A process as claimed in claim 1, wherein the hydrocarbon used is an aliphatic or cycloaliphatic hydrocarbon.

4. A process as claimed in claim 1, wherein the hydrocarbon used is cyclohexane.

5. A process as claimed in claim 1, wherein the polymeric starting material is mixed with the mixture of water and a hydrocarbon under atmospheric pressure and at up to 120°C.

6. A process as claimed in claim 1, wherein the aqueous mixture contains from 10 to 900 parts by weight of hydrocarbon per 100 parts by weight of water.

7. A process as claimed in claim 1, wherein from 5 to 300 parts by weight of the mixture of water and a hydrocarbon are used per 100 parts by weight of polymer.

## Revendications

1. Procédé de diminution de la quantité d'éthers cycliques oligomères dans les poly(tétraméthylène-éther)glycols ou les polyoxybutylène-polyoxyalkylène-glycols, caractérisé en ce qu'on mélange les poly(tétraméthylène-éther)glycols ou les polyoxybutylène-polyoxyalkylèneglycols contenant des éthers cycliques oligomères et présentant un poids moléculaire moyen de 200 à 450, avec un mélange d'eau et d'un hydrocarbure, et on isole de la phase aqueuse les poly(tétraméthylène-éther)glycols ou les polyoxybutylène-polyoxyalkylèneglycols purifiés après séparation des phases.

2. Procédé selon la revendication 1, caractérisé en ce qu'on obtient les poly(tétraméthylène-éther)-glycols ou les polyoxybutylène-polyoxyalkylène-glycols purifiés par évaporation de la phase aqueuse et les éthers cycliques oligomères par évaporation de la phase d'hydrocarbure.

3. Procédé selon la revendication 1, caractérisé en ce qu'on utilise comme hydrocarbure des hydrocarbures aliphatiques ou cycloaliphatiques.

4. Procédé selon la revendication 1, caractérisé en ce qu'on utilise comme hydrocarbure le cyclohexane.

5. Procédé selon la revendication 1, caractérisé en ce qu'on mélange les substances de départ polymères avec le mélange d'eau et d'hydrocarbure à la pression normale et à des températures allant jusqu'à 120°C.

6. Procédé selon la revendication 1, caractérisé en ce que le mélange aqueux contient, pour 100 parties en poids d'eau, 10 à 900 parties en poids d'hydrocarbure.

7. Procédé selon la revendication 1, caractérisé en ce qu'on utilise, pour 100 parties en poids de polymère, 5 à 300 parties en poids du mélange d'eau et d'hydrocarbure.